# EUROPEAN PATENT SPECIFICATION

(11) **EP 2 794 253 B1**
(45) Date of publication and mention of the grant of the patent: **08.06.2016**
(21) Application number: 12826560.0
(22) Date of filing: 24.12.2012
(51) Int. Cl.: B29D 30/72, B60C 13/00, B60C 1/00, C08K 3/00, C09D 175/04, C09D 175/14

(54) **METHOD OF FORMING COLOURED TYRE PORTIONS**
VERFAHREN ZUR HERSTELLUNG FARBIGER REIFENTEILE
PROCÉDÉ DE FORMATION DE PARTIES DE PNEUMATIQUE COLORÉES

(30) Priority: 23.12.2011 IT TO20111206
(43) Date of publication of application: 29.10.2014
(73) Proprietor: Bridgestone Corporation, Tokyo 104-8340 (JP)
(72) Inventor: PERTUSIO, Giovanni, Alessandro, 00146 Roma (IT); ALMI, Matteo, Simone, 20138 Milano (IT); COTUGNO, Salvatore, 00131 Roma (IT); FIORENZA, Paolo, 00156 Roma (IT); GRUARIN, Martina, 00121 Roma (IT); PAVONI, Piero, 00133 Roma (IT)
(74) Representative: Marchetti, Alessio
(86) International application number: PCT/IB2012/057691
(87) International publication number: WO 2013/093895

(56) References cited:
- WO-A1-2011/070429
- US-A- 3 648 748
- US-A- 4 131 149
- US-A- 4 158 378
- US-A- 5 300 164
- US-A- 6 093 271
- US-A1- 2004 055 680

## Description

### TECHNICAL FIELD

The present invention relates to a method of forming coloured tyre portions.

### BACKGROUND ART

In recent years, there has been an increase in demand in the tyre industry for coloured tyre portions for various, not least of all, aesthetic reasons.

Methods employed so far are based on adding to the tyre a coloured rubber compound formed using appropriate pigments.

The most commonly used methods employ a substantially three-layer rubber component comprising: a first connecting layer contacting the inner layers of the tyre; a second coloured layer made from the coloured compound; and a third outer cover layer which is removed prior to sale.

A drawback of this method lies in the coloured portion degrading rapidly, mainly due to chemical agents, such as antioxidants, migrating from the inner tyre layers to the coloured compound. A common practice, to slow down this degradation, is to increase the thickness of the coloured layer to slow down migration of the chemical agents. This solution, however, obviously has drawbacks in terms of heat generation and, therefore, rolling resistance.

Another more recently adopted solution is to insert between the tyre sidewall and the coloured layer a thin, highly impermeable barrier layer made from a composition designed to minimize migration of the chemical agents.

The Applicant has devised a method of forming coloured tyre portions, whereby a polymer barrier layer, formed by drying an aqueous dispersion, is deposited on the part of the tyre for colouring. This method is described in Patent Applications TO2009A000964 and TO2010A000850, which are included herein by way of reference.

This method employed water-based or UV cross-linkable paints.

Tests have shown that using these paints on a polymer barrier layer formed by drying an aqueous dispersion poses problems in terms of resistance to chemical agents and physical deterioration (cracking) of the coloured portion. Water-based paints have also been found to pose problems in terms of adhesion to the polymer barrier layer.

A need is therefore felt for a method of forming coloured tyre portions, which employs a barrier layer formed from an aqueous dispersion, but without incurring the above drawbacks of the known art.

The Applicant has surprisingly discovered that this can be fully achieved using a polyurethane paint in conjunction with a polymer barrier layer formed by drying an aqueous dispersion.

### DISCLOSURE OF INVENTION

It is an object of the present invention to provide a tyre comprising at least one coloured portion; said tyre being characterized in that said coloured portion comprises:
- a highly impermeable barrier layer; and
- a polyurethane paint on said barrier layer.

The highly impermeable barrier layer is made by depositing on the part of the tyre to be coloured an aqueous dispersion which is eventually dried.

Preferably, the tyre according to the present invention comprises a UV radiation protective layer on the polyurethane paint.

The aqueous dispersion of the barrier layer comprises at least a cross-linkable polymer base, and a surfactant of molecular formula (II)

([R₄R₅R₆NR₈(NR₇R₉R₁₀)n]⁽ⁿ⁺¹⁾⁺)y (n+1)X^{y-} (II)

where:
X is an atom or an anionic group
R₄, R₅ and R₆, which are the same or different, are each CₘH₂ₘ₊₁, where m is 1 to 3, or CH₂CHCH₂ or CHCHCH₃
R₇, R₉ e R₁₀, which are the same or different, are each CH₂CHCH₂ or CHCHCH₃
n is 0 or 1
y is 1, if n is 1; y is 1 or 2, if n is 0
R₈ is an aliphatic group C₁₅-C₂₂ when n is 0, and is an aliphatic group C₈-C₁₆ when n is 1
when n is 0, at least one of R₄, R₅, R₆ and R₈ comprises a double bond.

Preferably, R₇, R₈ and R₉ are CH₂CHCH₂, and, more preferably, n is 1 and R₈ is a saturated aliphatic group.

Preferably, R₈ comprises a double bond, and n is 0.

Preferably, the aqueous dispersion comprises at least one filler in the group comprising kaolin, clay, mica, feldspar, silica, graphite, bentonite, carbon black, and alumina.

Preferably, the cross-linkable polymer base comprises polymers with a Tg > 0°C.

### BEST MODE FOR CARRYING OUT THE INVENTION

The following are non-limiting examples for a clearer understanding of the present invention.

### EXAMPLES

Below are described two examples (A1, A2) in accordance with the present invention and employing polyurethane paint, and four control examples (B1, B2, C1, C2) employing water-based and UV cross-linkable paints respectively.

In the invention examples and control examples, each type of paint is applied on both a barrier layer formed from an aqueous dispersion comprising anionic surfactants, and a barrier layer formed from an aqueous dispersion comprising cationic surfactants.

The two barrier layers (1 and 2) used in the examples were formed by drying respective aqueous dispersions. The dispersions were prepared by dispersing all the Table I ingredients simultaneously in 1 litre of water. The resulting aqueous dispersion was stirred mechanically for 30 minutes and then sonicated for 15 minutes.

Table I shows the compositions, in phr, of the two barrier layers formed by drying the respective aqueous dispersions.

**TABLE I**

| | Layer 1 | Layer 2 |
|---|---|---|
| Cl-IIR | 100 | 100 |
| CLAY | 100 | 100 |
| CARBON BLACK | 50 | 50 |
| RESIN | 10 | 10 |
| ZnO | 1.5 | 1.5 |
| SULPHUR | 2.8 | 2.8 |
| ACCELERANTS | 1.5 | 1.5 |
| SURFACTANT (a) | 2.0 | -- |
| SURFACTANT (b) | -- | 2.0 |

| | | |
|---|---|---|
| Cl-IIR stands for chlorine-butyl rubber; surfactant (a) is of molecular formula CH₃(CH₂)₇CHCH(CH₂)₇CONHCH₂COO⁻ Na⁺; and surfactant (b) is of molecular formula [(CH3)₃N(CH₂)₈CHCH(CH₂)₇CH₃]⁺ I⁻ . | | |

The aqueous dispersion was deposited on the sidewall portion for colouring, and was dried to form the barrier layer.

In examples A, a polyurethane paint, obtained by mixing a BASF JONCRYL^{®} 963 acrylic component and a BASF BASONAT^{®} HA100 or BASONAT^{®} HA300 polyisocyanate-based component, was deposited on respective barrier layers 1 and 2.

In examples B, a water-based paint, in the group known as 'VERNICI IMC IDRO' or `IMC IDROFLEX' produced and marketed by SIVAM VERNICI SPA, was deposited on respective barrier layers 1 and 2.

In examples C, BASF LAROMER^{®} UV cross-linkable paint was deposited on respective barrier layers 1 and 2.

The coloured portions from the above examples were tested for delamination, bending resistance, ozone resistance, adhesion, and resistance to chemical agents.

More specifically, delamination testing determines the stretch at which the paint detaches from the substrate when stress-strain tensile tested; bending resistance testing determines cracking of the paint when stressed cyclically (10 million cycles) at a set deformation; ozone resistance testing (using the VW procedure) determines cracking after exposure to ozone in 200pphm/20% stretch/RT/48-hour conditions; adhesion testing determines detachment of the paint from the substrate by adhesive tape; and chemical resistance testing (using the RSA procedure) determines paint flaws following immersion for a given length of time in the following chemical agents: petrol, diesel fuel, brake fluid, salt-saturated solution.

Table II shows the results from the above tests. In Table II, A1 and A2 indicate example A (polyurethane paint) formed on layers 1 and 2 respectively.

**TABLE II**

| | A1 | A2 | B1 | B2 | C1 | C2 |
|---|---|---|---|---|---|---|
| Delamination (%) | 150 | 160 | 320 | 300 | 40 | 30 |
| Bending resistance | no cracks | no cracks | few cracks | few cracks | numerous cracks | numerous cracks |
| O₃ Resistance | no cracks | no cracks | no cracks | no cracks | no cracks | no cracks |
| Adhesion | OK | OK | Not OK | Not OK | OK | OK |
| Chemical resistance | No flaws | No flaws | highly flawed | highly flawed | flawed | flawed |

As shown by the results in Table II, examples A1 and A2 employing polyurethane paint show good results in all the tests, whereas those of examples B1, B2, C1 and C2 respectively employing water-based and UV cross-linkable paints confirm the known drawbacks.

Using polyurethane paint in conjunction with the barrier layer therefore surprisingly achieves the aims of the present invention.

## Claims

1. A tyre comprising at least one coloured portion; said tyre being **characterized in that** said coloured portion comprises:
- a highly impermeable barrier layer; and
- a polyurethane paint on said barrier layer;
said highly impermeable barrier layer being made by depositing on the part of the tyre to be coloured an aqueous dispersion which is eventually dried; said aqueous dispersion of the barrier layer comprising at least a cross-linkable polymer base, and a surfactant of molecular formula (II)
([R₄R₅R₆NR₈(NR₇R₉R₁₀)n]⁽ⁿ⁺¹⁾⁺)y (n+1)X^{y-} (II)
where:
X is an atom or an anionic group
R₄, R₅ and R₆, which are the same or different, are each CₘH₂ₘ₊₁, where m is 1 to 3, or CH₂CHCH₂ or CHCHCH₃
R₇, R₉ e R₁₀, which are the same or different, are each CH₂CHCH₂ or CHCHCH₃
n is 0 or 1
y is 1, if n is 1; y is 1 or 2, if n is 0
R₈ is an aliphatic group C₁₅-C₂₂ when n is 0, and is an aliphatic group C₈-C₁₆ when n is 1
when n is 0, at least one of R₄, R₅, R₆ and R₈ comprises a double bond.

2. A tyre as claimed in Claim 1, **characterized by** comprising a UV radiation protective layer on the polyurethane paint.

3. A tyre as claimed in Claims 1 or 2, **characterized in that** R₇, R₈ and R₉ are CH₂CHCH₂.

4. A tyre as claimed in Claims 1 or 2, **characterized in that** n is 1 and R₈ is a saturated aliphatic group.

5. A tyre as claimed in Claims 1 or 2, **characterized in that** R₈ comprises a double bond and n is 0.

6. A tyre as claimed in one of the foregoing Claims, **characterized in that** the aqueous dispersion comprises at least one filler in the group comprising kaolin, clay, mica, feldspar, silica, graphite, bentonite, carbon black, and alumina.

7. A tyre as claimed in one of the foregoing Claims, **characterized in that** the cross-linkable polymer base comprises at least one polymer with a Tg > 0°C.

## Patentansprüche

1. Reifen, umfassend mindestens einen gefärbten Abschnitt; wobei der Reifen **dadurch gekennzeichnet ist, dass** der gefärbte Abschnitt umfasst:
- eine hochgradig undurchlässige Sperrschicht; und
- einen Polyurethananstrich auf der Sperrschicht;
wobei die hochgradig undurchlässige Sperrschicht durch Auftragen einer wässrigen Dispersion auf den zu färbenden Teil des Reifens, welche letztlich getrocknet wird, hergestellt wird; wobei die wässrige Dispersion der Sperrschicht mindestens eine vernetzbare Polymerbasis und ein Tensid der Molekularformel (II) umfasst
([R₄R₅R₆NR₈(NR₇R₉R₁₀)n]⁽ⁿ⁺¹⁾⁺)y (n+1)X^{Y-} (II)
worin:
X ein Atom oder eine anionische Gruppe ist
R₄, R₅ und R₆, welche gleich oder verschieden sind, jeweils CₘH₂ₘ₊₁ sind, worin m 1 bis 3 ist, oder CH₂CHCH₂ oder CHCHCH₃ sind
R₇, R₉ und R₁₀, welche gleich oder verschieden sind, jeweils CH₂CHCH₂ oder CHCHCH₃ sind
n 0 oder 1 ist
y 1 ist, wenn n 1 ist; y 1 oder 2 ist, wenn n 0 ist
R₈ eine aliphatische Gruppe C₁₅-C₂₂ ist, wenn n 0 ist, und eine aliphatische Gruppe C₈-C₁₆ ist, wenn n 1 ist
wenn n 0 ist, mindestens eines von R₄, R₅, R₆ und R₈ eine Doppelbindung umfasst.

2. Reifen nach Anspruch 1, **gekennzeichnet durch** Umfassen einer UV-Strahlungsschutzschicht auf dem Polyurethananstrich.

3. Reifen nach Ansprüchen 1 oder 2, **dadurch gekennzeichnet, dass** R₇, R₈ und R₉ CH₂CHCH₂ sind.

4. Reifen nach Ansprüchen 1 oder 2, **dadurch gekennzeichnet, dass** n 1 ist und R₈ eine gesättigte aliphatische Gruppe ist.

5. Reifen nach Ansprüchen 1 oder 2, **dadurch gekennzeichnet, dass** R₈ eine Doppelbindung umfasst und n 0 ist.

6. Reifen nach einem der vorstehenden Ansprüche, **dadurch gekennzeichnet, dass** die wässrige Dispersion mindestens ein Füllstoff umfasst aus der Gruppe umfassend Kaolin, Ton, Glimmer, Feldspat, Kieselerde, Graphit, Bentonit, Ruß und Tonerde.

7. Reifen nach einem der vorstehenden Ansprüche, **dadurch gekennzeichnet, dass** die quervernetzbare Polymerbasis mindestens ein Polymer mit einer Tg > 0 °C umfasst.

## Revendications

1. Pneumatique comprenant au moins une partie colorée ; ledit pneumatique étant **caractérisé en ce que** ladite partie colorée comprend :
- une couche de barrière hautement imperméable ; et
- une peinture de polyuréthane sur ladite couche de barrière ;
ladite couche de barrière hautement imperméable étant fabriquée par dépôt, sur la partie du pneumatique destinée à être colorée, d'une dispersion aqueuse qui est finalement séchée ; ladite dispersion aqueuse de la couche de barrière comprenant au moins une base polymère réticulable, et un agent tensioactif de formule moléculaire (II)
([R₄R₅R₆NR₈ (NR₇R₉R₁₀)n] ⁽ⁿ⁺¹⁾⁺)y (n+1)X^{Y-} (II)
où :
X est un atome ou un groupe anionique
R₄, R₅ et R₆, qui sont identiques ou différents, sont chacun CₘH₂ₘ₊₁, où m va de 1 à 3, ou CH₂CHCH₂ ou CHCHCH₃
R₇, R₉ et R₁₀, qui sont identiques ou différents, sont chacun CH₂CHCH₂ ou CHCHCH₃
n vaut 0 ou 1
y vaut 1, si n vaut 1 ; y vaut 1 ou 2, si n vaut 0
R₈ est un groupe aliphatique en C₁₅ à C₂₂ lorsque n vaut 0, et est un groupe aliphatique en C₈ à C₁₆ lorsque n vaut 1
lorsque n vaut 0, au moins l'un parmi R₄, R₅, R₆ et R₈ comprend une double liaison.

2. Pneumatique selon la revendication 1, **caractérisé en ce qu**'il comprend une couche de protection contre le rayonnement UV sur la peinture de polyuréthane.

3. Pneumatique selon les revendications 1 ou 2, **caractérisé en ce que** R₇, R₈ et R₉ sont CH₂CHCH₂.

4. Pneumatique selon les revendications 1 ou 2, **caractérisé en ce que** n vaut 1 et R₈ est un groupe aliphatique saturé.

5. Pneumatique selon les revendications 1 ou 2, **caractérisé en ce que** R₈ comprend une double liaison et n vaut 0.

6. Pneumatique selon l'une des revendications précédentes, **caractérisé en ce que** la dispersion aqueuse comprend au moins une charge dans le groupe comprenant le kaolin, l'argile, le mica, le feldspath, la silice, le graphite, la bentonite, le noir de carbone et l'alumine.

7. Pneumatique selon l'une des revendications précédentes, **caractérisé en ce que** la base polymère réticulable comprend au moins un polymère avec une Tg > 0°C.
